**Europäisches Patentamt**

**European Patent Office**

**Office européen des brevets**

(19)

(11) Veröffentlichungsnummer: **0 234 238 B1**

(12) **EUROPÄISCHE PATENTSCHRIFT**

(45) Veröffentlichungstag der Patentschrift:
19.07.89

(21) Anmeldenummer: 87100571.6

(22) Anmeldetag: 17.01.87

(51) Int. Cl.⁴: **C25D 7/10, F16C 33/24**

(54) **Verfahren zur Herstellung eines folien- oder plattenförmigen Gebildes als Lagerwerkstoff für Gleitlager.**

(30) Priorität: 22.02.86 DE 3605781

(43) Veröffentlichungstag der Anmeldung:
02.09.87 Patentblatt 87/36

(45) Bekanntmachung des Hinweises auf die Patenterteilung:
19.07.89 Patentblatt 89/29

(84) Benannte Vertragsstaaten:
AT BE CH DE FR GB IT LI NL SE

(56) Entgegenhaltungen:
DE-B- 1 262 731
US-A- 3 247 080
US-A- 4 246 076
US-A- 4 376 161

(73) Patentinhaber: Kernforschungszentrum Karlsruhe
GmbH, Weberstrasse 5 Postfach 3640,
D-7500 Karlsruhe 1(DE)

(72) Erfinder: Ehrfeld, Wolfgang, Dr., Reutstrasse 7,
D-7500 Karlsruhe 41(DE)
Erfinder: Hagmann, Peter, Dr., Nagoldstrasse 9c,
D-7514 Leopoldshafen(DE)
Erfinder: Schelb, Werner, Dr., Birkenstrasse 10,
D-7507 Pfinztal 1(DE)

## Beschreibung

Die Erfindung betrifft ein Verfahren zur Herstellung eines folien- oder plattenförmigen Gebildes als Lagerwerkstoff für Gleitlager gemäß dem Oberbegriff von Anspruch 1.

Aus der DE-PS 683 764 ist es bekannt, Zweimetall-Lagerschalen durch galvanischen Niederschlag einer Schicht des Lagermetalls oder der Lagerlegierung auf einen Hartmetallträger herzustellen. Derartige Lager sind jedoch nicht strukturiert und haben daher keine selbstschmierenden Eigenschaften.

Für die Herstellung von selbstschmierenden Gleitlagern ist es bekannt, auf ein Trägermaterial, z.B. eine Folie oder eine Platte aus Stahl, eine Schicht aus einem Lagerwerkstoff, z.B. Bronze, in gesinterter Form aufzubringen. In diesen gesinterten und damit porösen Werkstoff wird ein Schmierstoff, z.B. eine Mischung aus Polytetrafluorethylen (PTFE) und Blei, eingewalzt (s. Firmschrift der Fa. Karl Schmidt GmbH, Neckarsulm). Dabei ist jedoch das Verhältnis von tragender Werkstofffläche zu Schmierstoff abgebender Fläche durch die Wahl des Werkstoffs und den Sinterprozeß weitgehend vorgegeben und kann daher nur in engen Grenzen variiert werden. Außerdem sind bedingt durch den Herstellungsprozeß unterschiedlich große Werkstoffflächenbereiche und gleichermaßen auch unterschiedliche große Schmierstoff abgebende Flächenbereiche statistisch verteilt. Dies hat zur Folge, daß in Teilbereichen entweder für die Schmierung oder für die Tragfähigkeit keine optimalen Bedingungen vorliegen.

Aus der Druckschrift "Haus der Technik-Vortragsveröffentlichungen", Heft 269, 1971, Vulkan-Verlag Dr. W. Classen, Essen, S. 61-67, ist eine Lagerbuchse aus einer Kupfergußlegierung bekannt, bei der ein Festschmierstoff, der in Taschen oder anderen Vertiefungen in der Lauffläche angeordnet ist, die Schmierung übernimmt. Gemäß der US-PS 3 938 868 können auch keramische Werkstoffe als Lagermittel verwendet werden.

Aus der DE-OS 22 34 428 ist es bekannt, zwischen den sich gegeneinander bewegenden Flächen eine perforierte Zwischenlage aus Metall, Kunststoff oder einem selbstschmierenden Material einzufügen und die Hohlräume mit Schmierstoff zu füllen. Auch können die Flächen selbst mit feinen Vertiefungen versehen werden, in dem die Oberfläche durch mechanische, chemische, elektrochemische oder elektrische Behandlungsverfahren ein Profil erhält, das überwalzt, überdreht oder überschliffen wird. Damit können Strukturen mit einem Muster von z.B. kreisförmigen oder kreuzförmigen Vertiefungen erzeugt werden, wobei der minimale Kantenabstand bzw. die Stegbreite etwa 0,1 mm bzw. 0,2 mm beträgt. In dieser Druckschrift wird ferner ausgeführt, daß es wichtig ist, die Hohlräume bzw. Vertiefungen dicht beieinander liegend anzuordnen. Mit den vorerwähnten Behandlungsverfahren lassen sich jedoch Strukturen mit noch geringerem Kantenabstand bzw. Stegbreite unter Berücksichtigung der erforderlichen Strukturhöhe nicht mehr realisieren.

Der Erfindung liegt die Aufgabe zugrunde, ein Verfahren zur Herstellung eines strukturierten folien- oder plattenförmigen Gebildes bei frei wählbarem Muster als Lagerwerkstoff für Gleitlager vorzusehen, bei dem die minimalen charakteristischen Lateralabmessungen der tragenden Strukturen bzw. der Schmierstoff abgebenden Strukturen im µm-Bereich liegen bei einer Strukturhöhe bis zu mehreren 100 µm.

Die im Patentanspruch 1 enthaltene Lösung dieser Aufgabe gestattet es, sowohl metallische Stege als auch metallische Zapfen mit jeweils dazwischen eingebrachtem Schmierstoff auf der metallischen Trägerschicht aufzubringen, wobei die Wandstärke der metallischen Stege bzw. die Spaltweite der Schmierstoff abgebenden Kanäle wenige µm beträgt bei einer Höhe von mehreren 100 µm. Durch die Art der Herstellung des Musters kann das Verhältnis von tragender zu Schmierstoff abgebender Fläche auch bei Abrieb gezielt vorgegeben werden. Bei parallelen Wänden der mit Schmierstoff gefüllten Kanäle bleibt das Verhältnis konstant; bei zueinander konisch verlaufenden Wänden variiert dieses Verhältnis in gezielter Weise mit dem Abrieb.

Die Ansprüche 2 und 3 beinhalten vorteilhafte Weiterbildungen der Maßnahmen gemäß Anspruch 1.

Die Maßnahme gemäß Anspruch 4 gestattet es, anstelle eines galvanisch abscheidbaren Metalls auch ein anderes Lagermaterial für die tragende Lageroberfläche einzusetzen.

Die Herstellung von Mikrostrukturen auf röntgentiefenlithographischem Wege bzw. der hiervon abgeleiteten Abformtechnik (LIGA-Verfahren) ist in dem Bereich KfK 3995, Nov. 1985, des Kernforschungszentrums Karlsruhe, auf den verwiesen wird, beschrieben und dargestellt.

Ausführungsbeispiele der Erfindung werden im folgenden anhand der Zeichnungen erläutert:

Die Figuren 1 bis 6 zeigen die Herstellung eines Lagerwerkstoffs, bei dem metallische, nach dem LIGA-Verfahren hergestellte Zapfen für die tragende Lageroberfläche von netzförmig miteinander verbundenen und mit einem Schmierstoff ausgefüllten Kanälen umschlossen sind.

Die Figuren 7 bis 9 zeigen ein Beispiel, bei dem ein folienförmiges Gebilde nach der Galvano-Abformtechnik hergestellt und sodann mit einem metallischen Trägermaterial verbunden und mit Schmierstoff gefüllt wurde.

Die Figuren 10 bis 15 zeigen ein drittes Beispiel für einen Lagerwerkstoff, bei dem in die tragende Lageroberfläche Dosierschlitze mit darunter liegenden, verbreiterten Schmiertaschen eingearbeitet wurden.

Die Figuren 16 und 17 zeigen die Herstellung eines Lagerwerkstoffs aus Kunststoff mit Hilfe eines auf röntgentiefenlithographisch-galvanoplastischem Wege hergestellten, metallischen Abformwerkzeuges.

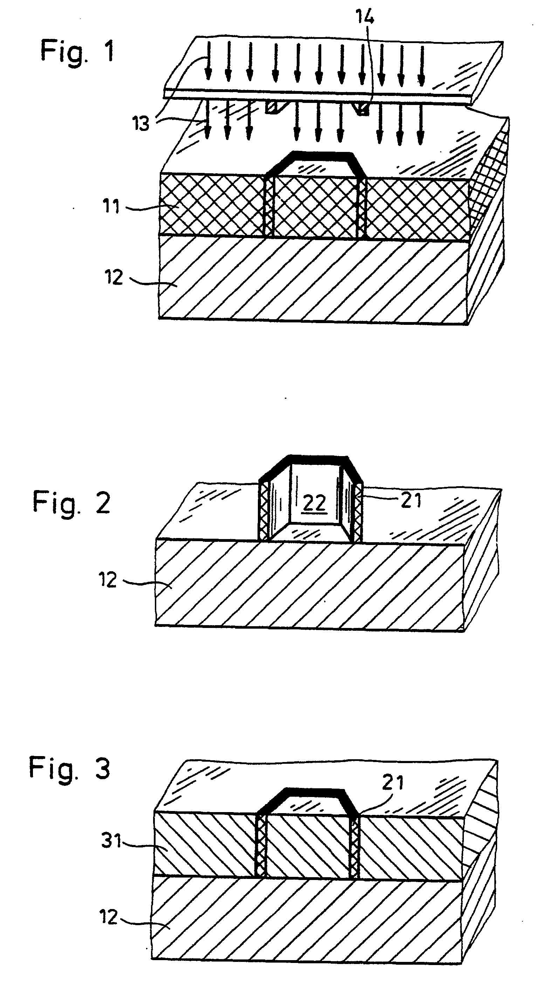

Figur 1 zeigt im Schnitt eine metallische Schicht 12, auf der eine Schicht 11 aus einem durch Röntgenstrahlung in seinen Eigenschaften veränderbarem

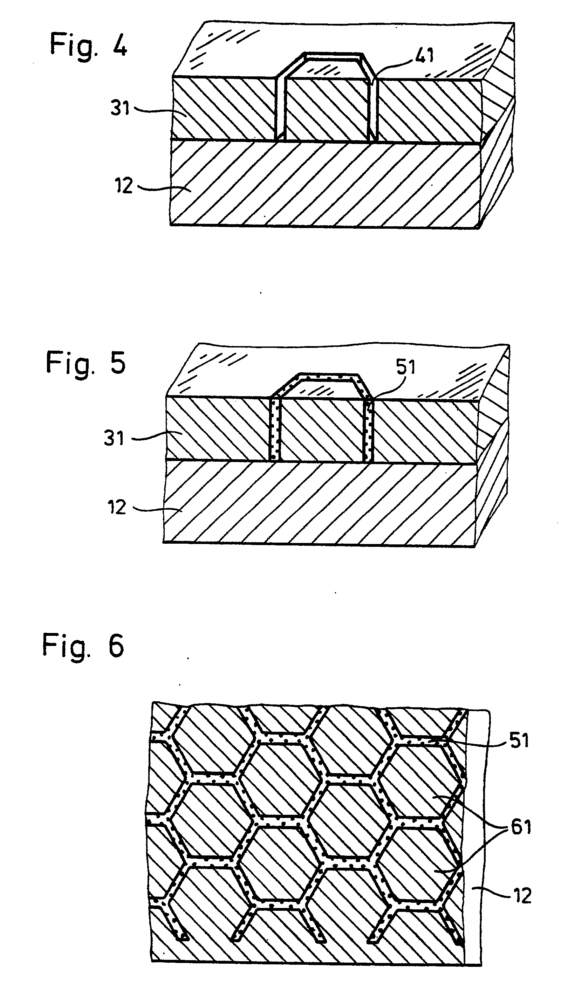

Material (Resistmaterial) aufgebracht wurde. Durch partielles Bestrahlen mit Synchrotronstrahlung 13 über eine Röntgenmaske 14 und partielles Entfernen des Resistmaterials unter Ausnutzung der durch die Strahlung erzeugten unterschiedlichen Materialeigenschaften entsteht eine Negativform 21 mit einem zur Röngenmaskenabsorberstruktur komplementären Muster aus Vertiefungen 22, deren Tiefe der Dicke der Negativform 21 entspricht (Fig. 2). Sodann werden die Vertiefungen 22 unter Verwendung der metallischen Schicht 12 als Elektrode galvanisch mit einem Metall 13 aufgefüllt (Fig. 3). Nach Einebnen der Schicht aus dem Metall 31 wird der restliche Kunststoff der Negativform 21 entfernt (Fig. 4) und die hierbei entstehenden Zwischenräume 41 mit einem Schmierstoff 51 gefüllt (Fig. 5). Figur 6 zeigt in der Draufsicht den erfindungsgemäßen Lagerwerkstoff für ein Gleitlager, bestehend aus der metallischen Schicht 12 als Trägermaterial, metallischen Zapfen 61 für die tragende Lagerfläche und diese umschliessenden netzförmig miteinander verbundenden Kanälen, die den Schmierstoff 51 enthalten. Dieser Lagerwerkstoff hat aufgrund der massiven metallischen Zapfen und deren großen Oberflächenanteil eine hohe Tragfähigkeit und gute Wärmeleitfähigkeit. Der Schmierstoffvorrat ist gemäß dem vorgegebenen Muster über die Lageroberfläche verteilt, wobei diese Verteilung und damit die guten Gleiteigenschaften auch bei Abrieb erhalten bleiben.

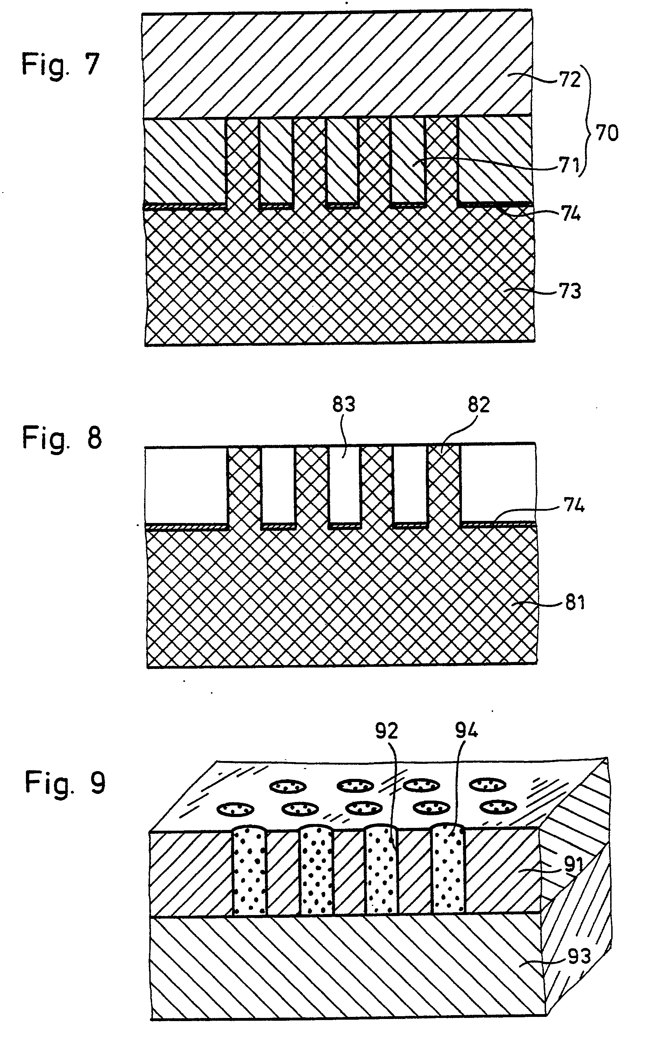

Figur 7 zeigt im Schnitt ein auf röntgentiefenlithographisch-galvanoplastischem Wege hergestelltes Abformwerkzeug 70, bestehend aus Mikrostrukturen 71 und einer fest mit diesen verbundenden Grundplatte 72, im Eingriff mit einer Abformmasse 73. Dabei wurden zuvor die Stirnflächen der Mikrostrukturen 71 mit einem leicht ablösbaren elektrisch leitenden Material 74 beschichtet. Als Abformmasse 73 wird ein Gießharz (Plexit M60 der Fa. Röhm, Darmstadt), dem als Härter 1 Vol.-% eines phlegmatisierten, 50-prozentigen Benzoylperoxids beigegeben wurde, verwendet. Zur leichteren Entformung wird dem Gießharz außerdem ein internes Trennmittel (Typ PAT 665 der Fa. Würtz GmbH, Bingen-Sponsheim) in einer Menge von 4 Vol-% beigegeben. Nach der Warmhärtung der Abformmasse 73, bei der das elektrisch leitende Material 74 mit der aushärtenden Abformmasse 73 eine feste Verbindung eingeht, erfolgt das Entformen der so entstandenden Negativform, bestehend aus einem Grundkörper 81 mit zapfenförmigen Strukturen 82, die netzförmig von Vertiefungen 83 umgeben sind. Am Grunde der Vertiefungen befindet sich das elektrisch leitende Material 74, das als Elektrode zum galvanischen Auffüllen der Vertiefungen 83 mit Bronze dient.

Nach dem Entfernen der Negativform 81, 82 und des elektrisch leitenden Materials 74 erhält man ein folienförmiges Gebilde 91 aus Metall mit kreisförmigen Durchbrüchen 92 (Fig. 9). Das folienförmigen Gebilde 91 wird durch Diffussionsschweißen mit einer metallischen Schicht 93 als Trägermaterial verbunden. Sodann werden die kreisförmigen Durchbrüche 92 mit einem Schmierstoff 94 ausgefüllt.

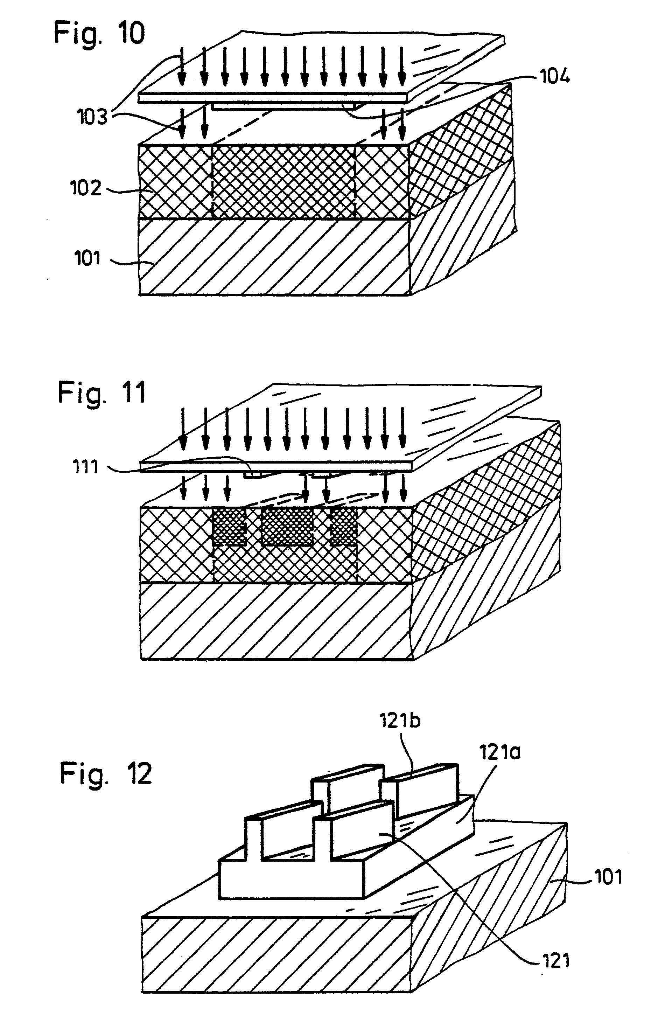

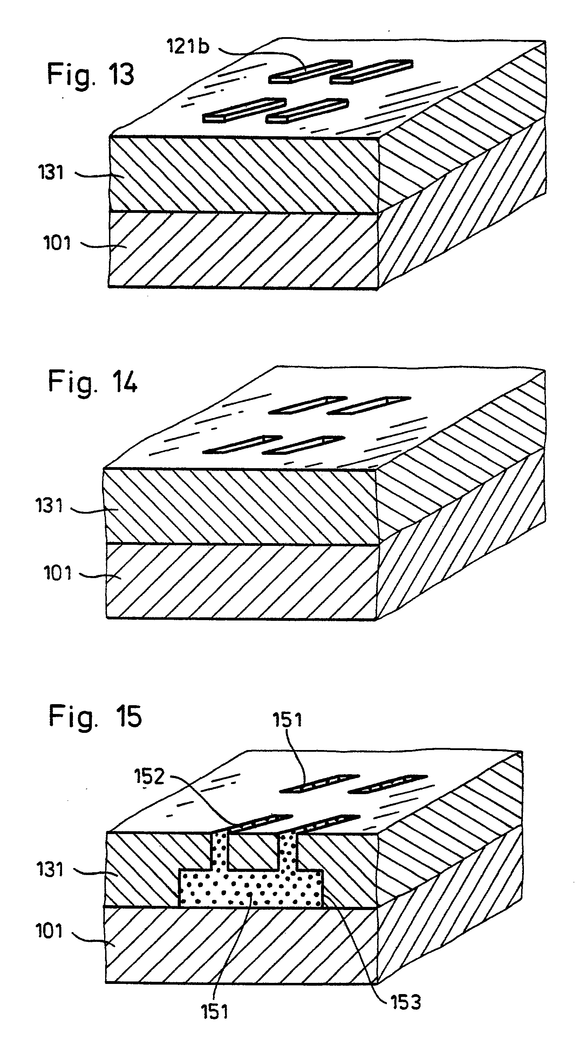

Fig. 10 zeigt eine metallische Schicht 101, auf der eine Schicht 102 aus durch Röntgenstrahlung in seinen Eigenschaften veränderbarem Material (Resist-Material) aufgebracht wurde. Durch partielles Bestrahlen mit Synchrotronstrahlung 103 über eine Röntgenmaske 104 und anschließendes erneutes Bestrahlen über eine zweite Röntgenmaske 111 (Fig. 11) mit Sychrotronstrahlung verminderter Eindringtiefe entsteht durch partielles Entfernen des Resistmaterials unter Ausnutzung der durch die Strahlung erzeugten unterschiedlichen Materialeigenschaften eine Negativform 121, bestehend aus Sockeln 121a und darauf befindlichen Zapfen 121b aus Resistmaterial. Danach wird auf der Elektrode 101 galvanisch ein Metall 13 abgeschieden (Fig. 13), das Sockel und Zapfen einbettet.

Nach Einebnen der Schicht aus Metall 131 werden die Zapfen 121b und die Sockel 121a der Negativform 121 entfernt (Fig. 14) und durch einen Schmierstoff 151 ersetzt (Fig. 15). Der Schmierstoff füllt sowohl die Dosierschlitze 152 als auch die damit verbundenen und darunterliegenden, gegenüber den Schlitzen 152 verbreiterten Schmiertaschen 153.

Die Ausführungform mit Schmiertaschen 153 und Dosierschlitzen 152 gemäß Fig. 15 kann mit den Ausführungsformen gemäß Fig. 6 und 9 auf derselben tragenden Schicht 101 kombiniert werden im Sinne einer Optimierung von Schmierung und Tragfähigkeit des Lagers. Diese Kombination bietet neben den bereits in Ausführungsbeispiel 1 erwähnten Vorzügen des dort dargestellten Lagerwerkstoffs aufgrund des hohen Schmierstoffvorrats eine verlängerte Standzeit des Lagers ohne Nachschmierung und ermöglicht durch Wahl der Dosierschlitzgröße und/oder Verwendung gelierter Schmieröle als Schmiermittel eine optimal dosierte Schmiermittelabgabe.

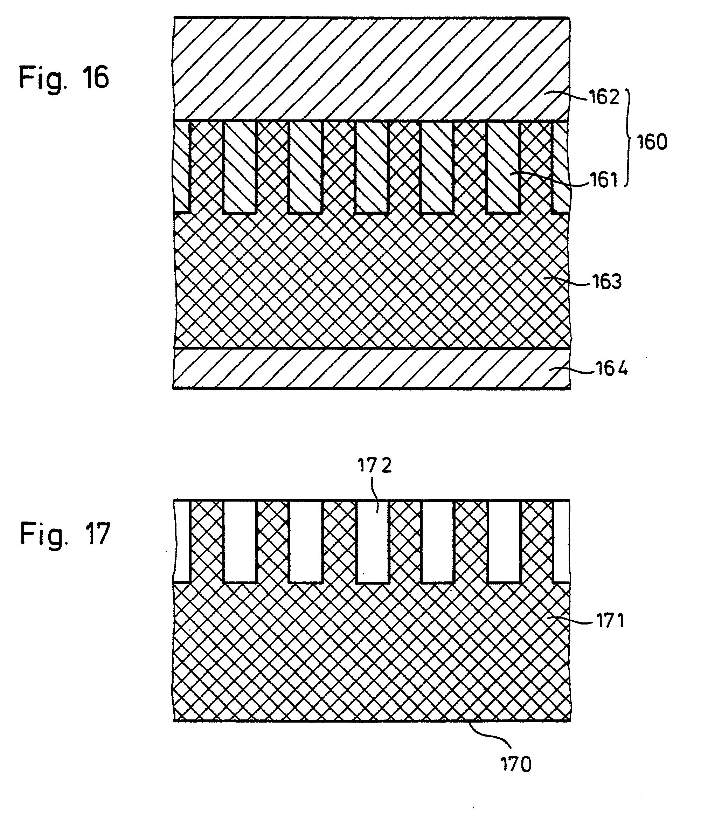

Fig. 16 zeigt im Schnitt ein auf röntgenlithographischgalvanoplastischem Weg hergestelltes, metallisches Abformwerkzeug 160, bestehend aus Mikrostrukturen 161 und einer fest mit diesen verbundenen Grundplatte 162, im Eingriff mit einer Abformmasse 163, die mit einer Entformhilfe 164 verbunden wird. Als Abformmasse kommen hierbei typische, für Kunststofflager verwendete Spritzgießmassen oder Gießharze infrage. Nach dem Verfestigen der Abformmasse 163 erfolgt das Entformen, worauf die Entformhilfe 164 entfernt wird. Nach einem Überarebiten der Oberfläche 170 (Fig. 17) liegt ein Gebilde 171 aus Kunststoff mit Vertiefungen 172 vor, die mit Schmierstoff ausgefüllt werden. Im Bedarfsfall kann die Entformhilfe 164 auch an der Abformmasse 163 als Trägermaterial belassen werden.

Die Ausführungsform nach Fig. 17 weist verglichen mit herkömmlichen geschmierten Kunststofflagern den Vorteil auf, daß eine gezielte dosierte Schmierung der Oberfläche erreicht wird und damit die zulässigen Gleitgeschwindigkeiten erhöht werden. Darüber hinaus kann durch eine selektive Epilamisierung der Oberfläche das Spreitverhalten des Lagers verbessert und somit die Standzeit des Lagers erhöht werden.

In den vorstehenden Ausführungsbeispielen haben die mit Schmierstoff ausgefüllten Zwischenräume die Gestalt von netzförmigen, hexagonalen Pris-

men, zylindrischen Bohrungen oder Dosierschlitzen. Anstatt desse oder ergänzend hierzu ist es selbstverständlich auch möglich, die Zwischenräume geometrisch anders zu gestalten, z. B. in Form von Spiralnuten.

**Patentansprüche**

1. Verfahren zur Herstellung eines folien- oder plattenförmigen Gebildes als Lagerwerkstoff für Gleitlager mit einem Muster für die tragende Lagerfläche und einen Schmierstoff unter Anwendung eines galvanoplastischen Fertigungsschrittes, gekennzeichnet durch folgende Verfahrensschritte:
   a) Herstellen einer Form aus Kunststoff (Negativform 21) mit einem Muster aus Vertiefungen (22), deren Grund eine elektrisch leitende Schicht (12) bildet, wobei
   b) die Vertiefungen (22) auf röntgentiefenlithographischem Wege oder durch die hiervon abgeleitete Abformtechnik in den Kunststoff eingearbeitet werden;
   c) Galvanisches Auffüllen der Vertiefungen (22) unter Verwendung der elektrisch leitenden Schicht (12) als Elektrode;
   d) Entfernen des restlichen Kunststoffes der Negativform (21) und
   e) Füllen der so entstandenen Zwischenräume (41) mit dem Schmierstoff (51).

2. Verfahren nach Anspruch 1, dadurch gekennzeichnet, daß nach dem Entfernen des restlichen Kunststoffes der Form (81, 82) gemäß Schritt d) das folienförmige Gebilde (91) aus Metall mit einem Trägermaterial (93) verbunden wird und sodann die Durchbrüche (92) in dem Gebilde (91) mit Schmierstoff (94) ausgefüllt werden.

3. Verfahren nach Anspruch 1, dadurch gekennzeichnet, daß durch Röntgenstrahlung unterschiedlicher Eindringtiefe Formen (121) aus Sockeln (121a) mit darauf befindlichen Zapfen (121b) erzeugt werden, worauf die Zapfen (121b) und Sockel (121a) nach dem galvanischen Einbetten mit Metall (131) entfernt und durch einen Schmierstoff (151) ersetzt werden.

4. Verfahren nach den Schritten a) bis d) gemäß Anspruch 1, dadurch gekennzeichnet, daß der gemäß Schritt d) entfernte Kunststoff der Form durch ein vorgebbares, insbesondere nicht abscheidbares Lagermaterial, z.B. Kunststoff, Glas oder Keramik, ersetzt wird, worauf die elektrisch leitende Schicht und die galvanische Füllung entfernt und die so zwischen dem Lagermaterial entstandenen Zwischenräume mit Schmierstoff gefüllt werden.

**Revendications**

1. Procédé de fabrication d'une feuille ou d'une plaque en tant que matériau de palier pour les paliers lisses, avec un modèle pour les surfaces portantes de palier, et un lubrifiant en appliquant une étape de finition galvanoplastique, caractérisé par les étapes de procédé suivantes:
   a) fabrication d'une forme en matière plastique (forme négative (21)) avec un modèle en cavités (22) dont la base forme une couche (12) qui conduit électriquement pour laquelle
   b) les cavités (22) sont insérées dans la matière plastique par des moyens lithographiques par des rayons X profonds ou grâce à la technique de moulage dérivée de cela
   c) remplissage galvanique des cavités (22) par l'utilisation d'une couche qui conduit l'électricité (12) comme électrode
   d) élimination de la matière plastique résiduelle de la forme négative (21) et
   e) remplissage des espaces intermédiaires (41) formés avec le lubrifiant (51).

2. Procédé selon la revendication 1, caractérisé en ce que, après élimination de la matière plastique résiduelle de la forme (81, 82) selon l'étape d), la masse en forme de feuille (91) en métal est reliée à un matériau support (93) et ensuite les orifices (92) dans la masse (91) sont remplis de lubrifiant (94).

3. Procédé selon la revendication 1, caractérisé en ce que les formes d'une profondeur de pénétration différentes par irradiation aux rayons X, à partir du socle (121a), sont obtenues avec des tenons (121b) qui se trouvent au-dessus, sur lesquels les tenons (121b) et le socle (121a) après l'inclusion galvanique avec le métal (131) sont éliminés et sont remplacés par un lubrifiant (151).

4. Procédé selon les étapes a) à d) selon la revendication 1, caractérisé en ce que la matière plastique de la forme éliminée selon l'étape d) est remplacée par un matériau de palier avantageux, en particulier qui n'est pas amovible par exemple du plastique, du verre ou de la céramique, et sur lequel la couche qui conduit électriquement et le remplissage galvanique est éliminé et les espaces intermédiaires survenus ainsi entre le matériau du roulement est rempli de lubrifiant.

**Claims**

1. Process for manufacturing a sheet- or plate-shaped structure as a bearing material for sliding bearings, having a design for the supporting bearing face and a lubricant, utilising a galvanoplastic manufacturing step, characterised by the following process steps:
   a) manufacturing a mould from plastics material (negative mould 21), having a design of recesses (22), the base of which forms an electrically conductive layer (12), whereby
   b) the recesses (22) are worked into the plastics material by a deep X-ray lithographical method or by means of the moulding technique derived therefrom;
   c) galvanically filling the recesses (22), utilising the electrically conductive layer (12) as an electrode;
   d) removing the residual plastics material of the negative mould (21;) and
   e) filling the gaps (41), thus produced, with the lubricant (51).

2. Process according to claim 1, characterised in that, after removal of the residual plastics material of the mould (81, 82) in accordance with step d), the sheet-like metal structure (91) is joined to a carrier

material (93), and then the openings (92) in the structure (91) are filled with lubricant (94).

3. Process according to claim 1, characterised in that moulds (121) are produced from sockets (121a) with pins (121b) situated thereon by means of X-radiation having different depths of penetration, whereupon the pins (121b) and sockets (121a) are removed after being galvanically embedded in metal (131) and are replaced by a lubricant (151).

4. Process according to steps a) to d) in accordance with claim 1, characterised in that the plastics material of the mould, which has been removed in accordance with step d), is replaced by a predeterminable bearing material, more especially a non-separable material, e.g. plastics material, glass or ceramics, whereupon the electrically conductive layer and the galvanic filling are removed, and the gaps thus produced between the bearing material are filled with lubricant.

Fig. 1

Fig. 2

Fig. 3

Fig. 4

Fig. 5

Fig. 6

Fig. 7

Fig. 8

Fig. 9

Fig. 10

103

104

102

101

Fig. 11

111

Fig. 12

121b

121a

101

121

Fig. 13

121b

131

101

Fig. 14

131

101

Fig. 15

151

152

131

101

151

153

Fig. 16

162
160
161
163
164

Fig. 17

172

171

170